(19) Europäisches Patentamt
European Patent Office
Office européen des brevets

(11) **EP 3 872 515 A1**

(12) **EUROPEAN PATENT APPLICATION**

(43) Date of publication:
**01.09.2021 Bulletin 2021/35**

(51) Int Cl.:
***G01S 3/808*** (2006.01)     ***H04R 1/20*** (2006.01)

(21) Application number: **21152069.7**

(22) Date of filing: **18.01.2021**

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**
Designated Extension States:
**BA ME**
Designated Validation States:
**KH MA MD TN**

(30) Priority: **27.02.2020 JP 2020032257**

(71) Applicant: **MITSUBISHI HEAVY INDUSTRIES, LTD.**
**Chiyoda-ku,**
**Tokyo 100-8332 (JP)**

(72) Inventors:
• **HOSOYA, Hiroyuki**
**Tokyo, 100-8332 (JP)**
• **HAYASHI, Kentaro**
**Tokyo, 100-8332 (JP)**
• **NAKANO, Takahiro**
**Tokyo, 100-8332 (JP)**

(74) Representative: **Studio Torta S.p.A.**
**Via Viotti, 9**
**10121 Torino (IT)**

(54) **SOUND SOURCE LOCALIZATION SYSTEM, AND SOUND SOURCE LOCALIZATION METHOD AND SOUND SOURCE LOCALIZATION PROGRAM THEREOF**

(57) To provide a sound source localization system, and a sound source localization method and a sound source localization program thereof, which can provide improved versatility in sound source localization.
Solving Means
A system includes: a plurality of sensors (3) disposed surrounding a space (S) and configured to detect a sound pressure and a particle velocity, an estimation unit (5) configured to estimate a sound pressure at a virtual position corresponding to a frequency of a localization target in the space (S) on the basis of the sound pressure and the particle velocity detected by the sensors (3), and a localization unit (6) configured to perform sound source localization corresponding to the frequency on the basis of the sound pressure at the virtual position.

FIG. 1

**Description**

Technical Field

The present disclosure relates to a sound source localization system, and a sound source localization method and a sound source localization program thereof.

Background Art

The sound source localization is performed by using sensors constituting an array. In the array, sensors are disposed in accordance with a target frequency.

Since the sensors are physically disposed in the array, the available frequencies are limited. Patent Document 1 discloses a mechanism for physically varying the arrangement position of the sensors in the array.

Citation List

Patent Literature

Patent Document 1: WO 2014/156292 A

Summary of Invention

Technical Problem

However, even when the arrangement position of the sensor is physically variable, the available frequency is limited by the number of variable forms of the array. For this reason, appropriate measurement with an optimal array arrangement for a target frequency may not be performed.

Therefore, a versatile sound source localization system is required.

The present disclosure has been made in view of such circumstances, and an object thereof is to provide a sound source localization system, and a sound source localization method and a sound source localization program thereof, which can provide improved versatility in sound source localization.

Solution to Problem

A first aspect of the present disclosure is a sound source localization system including: a plurality of sensors disposed surrounding a space and configured to detect a sound pressure and a particle velocity; an estimation unit configured to estimate a sound pressure at a virtual position corresponding to a frequency of a localization target in the space on the basis of the sound pressure and the particle velocity detected by the plurality of sensors; and a localization unit configured to perform sound source localization corresponding to the frequency on the basis of the sound pressure at the virtual position.

A second aspect of the present disclosure is a sound source localization method including the steps of: estimating a sound pressure at a virtual position corresponding to a frequency of a localization target in a space on the basis of a sound pressure and a particle velocity detected by a plurality of sensors disposed surrounding the space and configured to detect the sound pressure and the particle velocity; and performing sound source localization corresponding to the frequency on the basis of the sound pressure at the virtual position.

A third aspect of the present disclosure is a sound source localization program, which is configured to cause a computer to execute: a process of estimating a sound pressure at a virtual position corresponding to a frequency of a localization target in a space on the basis of a sound pressure and a particle velocity detected by a plurality of sensors disposed surrounding the space and configured to detect the sound pressure and the particle velocity; and a process of performing sound source localization corresponding to the frequency on the basis of the sound pressure at the virtual position.

Advantageous Effects of Invention

According to the present disclosure, there is an effect that versatility can be improved in sound source localization.

Brief Description of Drawings

FIG. 1 is a diagram illustrating a schematic configuration of a sound source localization system according to an embodiment of the present disclosure.

FIG. 2 is a diagram illustrating an example of a hardware configuration of an information processing unit according to an embodiment of the present disclosure.

FIG. 3 is a diagram illustrating a sound field in a cross section of a sensor array according to an embodiment of the present disclosure.

FIG. 4 is a diagram illustrating an example in which a virtual position is set in a cross section of a sensor array according to an embodiment of the present disclosure.

FIG. 5 is a diagram illustrating an example of sound source visualization according to an embodiment of the present disclosure.

FIG. 6 is a flowchart illustrating an example of a procedure of a sound source localization process according to an embodiment of the present disclosure.

FIG. 7 is a flowchart illustrating an example of a procedure of a modified example of a sound source localization process according to an embodiment of the present disclosure.

FIG. 8 is a flowchart illustrating an example of a procedure of a modified example of a sound source localization process according to an embodiment of the present disclosure.

Description of Embodiments

Hereinafter, an embodiment of a sound source localization system, and a sound source localization method and a sound source localization program thereof according to the present disclosure will be described with reference to the drawings.

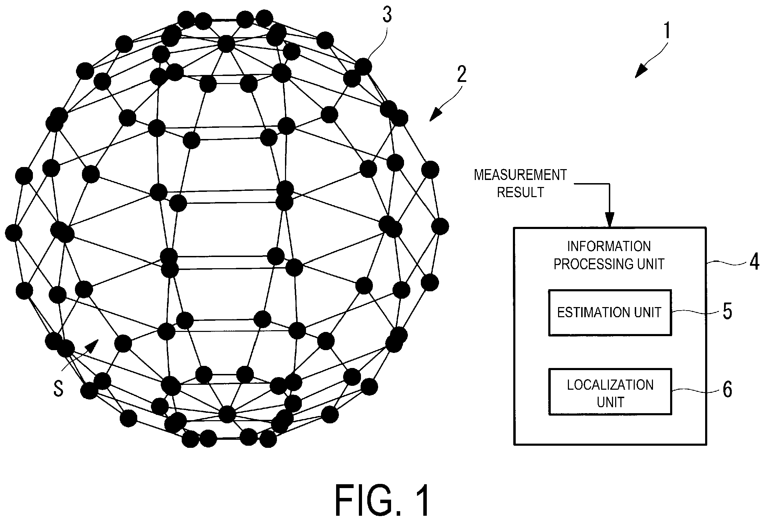

FIG. 1 is a diagram illustrating a schematic configuration of a sound source localization system 1 according to an embodiment of the present disclosure. As illustrated in FIG. 1, the sound source localization system 1 according to the present embodiment includes a sensor array 2 and an information processing unit 4 as main components.

The sensor array 2 includes a plurality of sensors 3. The sensors 3 are disposed surrounding a space S. In the present embodiment, a case where the space S surrounded by the sensors 3 is spherical will be described as an example. Since the space S surrounded by the sensors 3 is a closed space, four or more sensors 3 are preferably provided, for example. Note that the space S is not limited to a spherical shape.

Each of the disposed sensors 3 detects a sound pressure and a particle velocity. The sound pressure is a pressure generated by sound at a position where the sensor 3 is disposed. The particle velocity is a velocity of the acoustic particle at a position where the sensor 3 is disposed. In other words, the particle velocity is oscillation of air. As will be described later, the particle velocity corresponds to a sound pressure gradient. The sound pressure and the particle velocity detected by each sensor 3 are output to the information processing unit 4.

The sensors 3 disposed as the sensor array 2 are disposed surrounding a predetermined space S as illustrated in FIG. 1. The arrangement position, arrangement density, or the like of the sensors 3 is not limited to that in FIG. 1.

Intervals between the sensors 3 disposed as the sensor array 2 are preferably set to about 1/2 of the wavelength assumed at a target frequency. Specifically, 1/2 of the wavelength of the highest target frequency is preferably set as the maximum value of intervals between the sensors 3.

The information processing unit 4 estimates the sound pressure at a freely-selected position on the basis of information from the sensor 3 and performs sound source localization. When performing acoustic localization, it is necessary to measure the sound pressure at the position (interval) corresponding to a frequency of the localization target. However, in a case where the measurement value of the physically disposed sensor 3 is used as it is, since the measurement position of the sound pressure is fixed, an available frequency is limited. Therefore, the information processing unit 4 estimates the sound pressure at a virtual position (particularly, a position where the sensors 3 are not disposed) by using the measurement value of the disposed sensors 3, thereby performing acoustic localization corresponding to various frequencies.

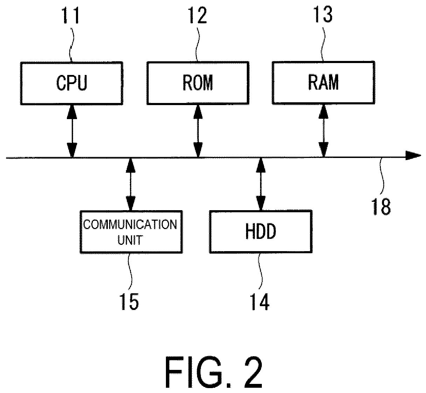

FIG. 2 is a diagram illustrating an example of a hardware configuration of an information processing unit 4 according to the present embodiment.

As illustrated in FIG. 2, the information processing unit 4 is a computer system, and includes, for example, a CPU 11, a Read Only Memory (ROM) 12 for storing programs or the like to be executed by the CPU 11, a Random Access Memory (RAM) 13 functioning as a work area when each program is executed, a hard disk drive (HDD) 14 as a mass storage device, and a communication unit 15 for connecting to a network or the like. A solid state drive (SSD) may be used as the mass storage device. These units are connected via a bus 18.

The information processing unit 4 may include an input unit including a keyboard and a mouse, and a display unit including a liquid crystal display device for displaying data.

The storage medium for storing the program or the like executed by the CPU 11 is not limited to the ROM 12. For example, another auxiliary storage device such as a magnetic disk, a magneto-optical disk, or a semiconductor memory may be used.

A series of processing steps for achieving various functions to be described later is recorded in the hard disk drive 14 or the like in the form of a program, and the CPU 11 reads the program and writes it to the RAM 13 or the like to execute processing and arithmetic processing of information. This allows various functions to be described later to be achieved. The program may be installed in advance in the ROM 12 or another storage medium, may be provided in a state that a computer-readable storage medium stores the program, or may be distributed via wired or wireless communication means. Examples of the computer-readable storage medium include a magnetic disk, a magneto-optical disk, a CD-ROM, a DVD-ROM, and a semiconductor memory.

As illustrated in FIG. 1, the information processing unit 4 includes an estimation unit 5 and a localization unit 6.

The estimation unit 5 estimates the sound pressure at a virtual position VP corresponding to the frequency of the localization target in the space S on the basis of the sound pressure and the particle velocity detected by the sensor 3. Specifically, the estimation unit 5 estimates the sound pressure inside the space S by the Kirchhoff-Helmholtz integral theorem on the basis of the sound pressure and the particle velocity detected by the sensors 3.

The Kirchhoff-Helmholtz integral theorem is a theorem for allowing a sound field inside the space S from the boundary of the space S (the outer peripheral surface of the space S) to be reproduced. Specifically, the kirchhoff-Helmholtz integral theorem is described by Equation (1) below.

[Equation 1]

$$p(\mathrm{r}) = \int_{\partial\Omega}\left(G(r|r_s)\frac{\partial p(r_s)}{\partial n} - p(r_s)\frac{\partial G(r|r_s)}{\partial n}\right)dr_s \qquad (1)$$

In Equation (1) above, $\Omega$ represents the space S, $\partial\Omega$ represents a boundary surface of the space S (an outer peripheral surface on which the sensor 3 is disposed), rs represents a position vector indicating the boundary surface (the position of the sensor 3), r represents a position vector indicating a freely-selected position in the space S, p represents a sound pressure, and n represents an outward normal vector on $\partial\Omega$. That is, p (rs) represents the sound pressure at the position of the sensor 3. p (r) represents a sound pressure at a freely-selected position in the space S. $\partial p/\partial n$ represents a sound pressure gradient. The sound pressure gradient corresponds to the particle velocity. Specifically, the relationship between the sound pressure gradient and the particle velocity v is expressed as $\partial p/\partial n = j\rho\omega v$. Note that j is an imaginary unit, $\rho$ is a density of a medium (air), and co is an angular frequency. G represents a Green function as illustrated in Equation (2) below.

[Equation 2]

$$G(r|r_s) = \frac{e^{ik\|r-r_s\|}}{4\pi\|r-r_s\|} \qquad (2)$$

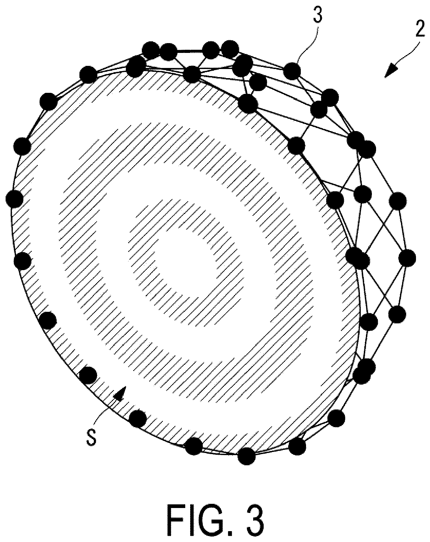

In Equation (2), k is a wave number. According to Equations (1) and (2), the sound pressure p (r) at a freely-selected position r in the space S can be derived on the basis of the sound pressure p (rs) and the sound pressure gradient $\partial p/\partial n$ (particle velocity) at the sensor position. For this reason, the Kirchhoff-Helmholtz integral theorem can be used to reproduce the sound field (sound pressure state) in the space S, for example, as illustrated in FIG. 3.

In this way, since the sound field in the space S can be reproduced, the estimation unit 5 sets the virtual position VP according to the frequency of the localization target in the space S. The virtual position VP is a position at which the sound pressure is estimated. The detection sensitivity of the sound having a frequency of the localization target depends on, for example, the detection position, the interval between the detection positions, or the like. Therefore, for the virtual position VP, the arrangement position, the interval, and the like are set in advance for the number of virtual position VPs set so that the sound can be appropriately detected according to the frequency of the localization target.

In a case where directivity is considered in the localization, a plurality of virtual positions VP are preferably set in the space S on the basis of the frequency of the localization target and a localization direction. In a case where the virtual positions VP are set in this way, directivity is provided for the localization direction, which is a target direction of the sound source localization. Specifically, the sensitivity to noise in the localization direction can be improved.

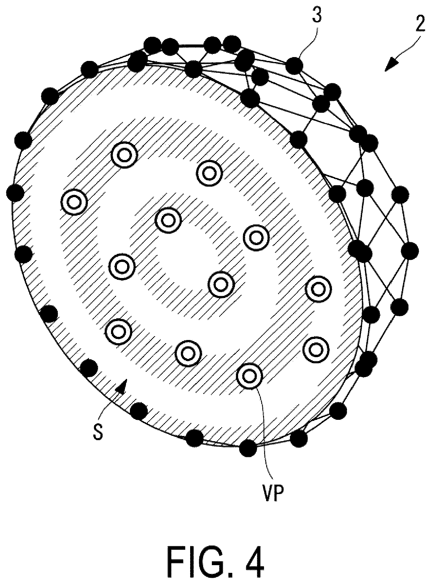

For example, the virtual positions VP are set in the space S as illustrated in FIG. 4. FIG. 4 illustrates an example in which the virtual positions VP are set in accordance with a freely-selected frequency. When the virtual positions VP are set in this manner, the sound pressure corresponding to each virtual position VP is estimated using Equation (1).

In this way, since the sound pressure at a freely-selected point inside the space S can be acquired using the measurement result of the sensors 3 around the space S, the sound pressure corresponding to various frequencies can be acquired by appropriately changing the virtual positions VP.

Note that the virtual position VP described above is set on the basis of the frequency and the localization direction; however, no such limitation is intended. The virtual position VP may be set on the basis of other factors such as the use.

The localization unit 6 performs sound source localization corresponding to the frequency on the basis of the sound pressure at the virtual position VP. Specifically, the localization unit 6 performs beamforming on the basis of the sound pressures at the plurality of virtual positions VP to perform sound source localization. A signal reaching each virtual position VP is subjected to a process such as a delay to provide an equivalently very sharp directivity, and the intensity of a sound wave arriving from a specific direction is obtained. Then, the direction of the sharp directivity is changed, and the area in the localization direction is scanned to estimate the position and intensity of the sound source. When the sound source localization is performed, since the area in the localization direction is scanned, the position and intensity of the sound source in the area can be visualized.

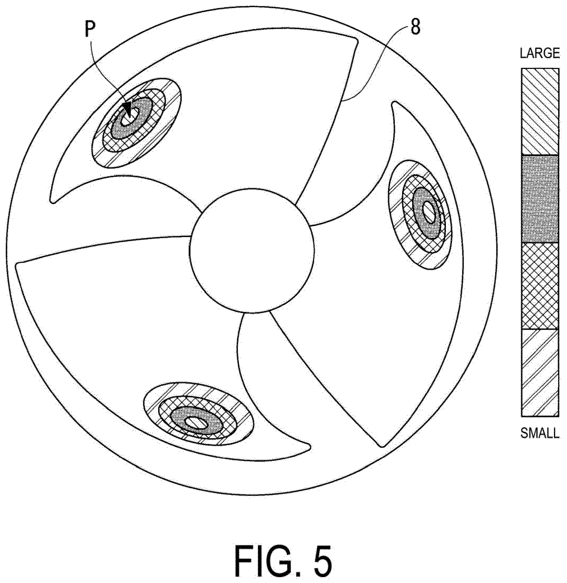

FIG. 5 illustrates an example of a case where sound source localization (sound source visualization) is performed by setting the fan 8 as the localization target and setting the direction of the fan 8 with respect to the sensor array 2 as the localization direction. In FIG. 5, the intensity of the sound source is illustrated as 4 levels. In the example of FIG. 5, the position of P in the fan 8 can be identified as the sound source. In a case where the sound source localization is performed in this manner, the sound source can be specified.

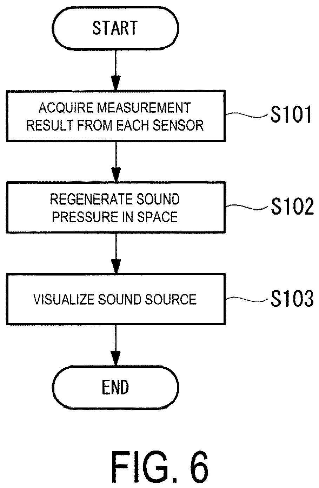

Next, an example of the sound source localization process by the information processing unit 4 will be described with reference to FIG. 6.

FIG. 6 is a flowchart illustrating an example of a procedure of the sound source localization process according to the present embodiment. The flow illustrated in FIG. 6 is executed, for example, when the user or the like gives an instruction to start sound source localization.

First, a measurement result is acquired from each sensor 3 (S101).

Next, the sound pressure at the virtual position VP set in the space S is regenerated (S102).

Next, the sound source localization is performed on the basis of the regenerated sound pressure to visualize the sound source (S103).

In the above example, the case where the Kirchhoff-Helmholtz integral theorem is applied using the measurement result of the sensors 3 as the sound pressure of the outer peripheral surface of the space S has been described. However, the Kirchhoff-Helmholtz integral theorem may be applied using the sound pressure distribution estimated on the outer peripheral surface. For example, in a case where the space S has a spherical shape and the sensors 3 are disposed on the spherical surface, the sound pressure distribution on the spherical surface may be estimated on the basis of the sound pressure and the particle velocity detected by the sensors 3, and the sound pressure at the virtual position VP in the space S may be estimated on the basis of the sound pressure distribution on the spherical surface. Specifically, the sound pressure distribution on the spherical surface can be expressed (estimated) from the measurement result of the sensors 3 disposed on the spherical surface by using compressed sensing with spherical harmonics (Fourier transform on the spherical surface) as a basis function. That is, the sound pressure distribution of the spherical surface is expressed by superposition of spherical harmonics. Note that, as long as the sound pressure distribution on the spherical surface can be estimated, the disclosure is not limited to the case of using compressed sensing with spherical harmonics as a basis function.

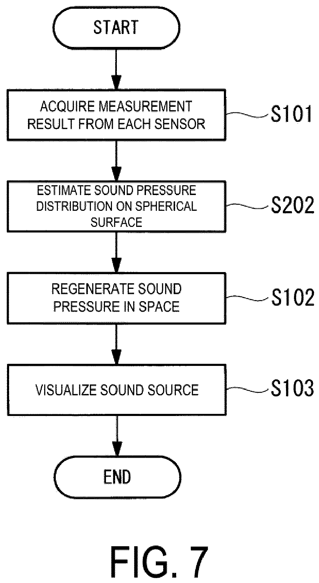

In such a case, the flow of the sound source localization process is as illustrated in FIG. 7. Note that the same processes as those in the flow of FIG. 6 are denoted by the same reference signs. That is, after S101, the sound pressure distribution on the spherical surface is estimated on the basis of the measurement results from each sensor 3 (S202). Then, the sound pressure at the virtual position VP set in the space S is regenerated on the basis of the sound pressure distribution (S102). This allows the estimation accuracy of the sound pressure to be improved. That is, the interval between the virtual positions VP can be set to be narrow, and a higher frequency can be available.

When the space S has a rectangular parallelepiped shape and the sensors 3 are disposed on the rectangular parallelepiped, the sound pressure distribution on the rectangular parallelepiped may be estimated on the basis of the sound pressure and the particle velocity detected by the sensors 3, and the sound pressure at the virtual position VP in the space S may be estimated on the basis of the sound pressure distribution on the rectangular parallelepiped. Specifically, the sound pressure distribution on the rectangular parallelepiped can be expressed (estimated) from the measurement results of the sensors 3 disposed on the rectangular parallelepiped by using compressed sensing with a sine wave as a basis function. That is, the sound pressure distribution on the rectangular parallelepiped is expressed by superposition of sine waves having different wavelengths. As long as the sound pressure distribution on the rectangular parallelepiped can be estimated, the disclosure is not limited to the case of using compressed sensing with a sine wave as a basis function.

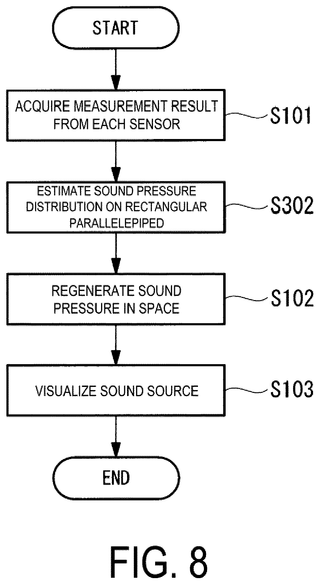

In such a case, the flow of the sound source localization process is as illustrated in FIG. 8. Note that the same processes as those in the flow of FIG. 6 are denoted by the same reference signs. That is, after S101, the sound pressure distribution on the rectangular parallelepiped is estimated on the basis of the measurement result from each sensor 3 (S302). Then, the sound pressure at the virtual position VP set in the space S is regenerated on the basis of the sound pressure distribution (S 102). This allows the estimation accuracy of the sound pressure to be improved. That is, the interval between the virtual positions VP can be set to be narrow, and a higher frequency can be available.

As described above, according to the sound source localization system, and the sound source localization method and the sound source localization program thereof, according to the present embodiment, the sound pressure inside the space S surrounded by the plurality of sensors 3 can be estimated by using the sound pressure and the particle velocity detected by the plurality of sensors 3 surrounding the space S. That is, the sound pressure at a position (a position where the sensors 3 are not disposed) set in the space S according to a frequency of the localization can be estimated. On the basis of the sound pressure at the virtual position VP, the sound source localization with respect to the frequency can be performed.

That is, the sound source localization can be performed with a freely-selected frequency as a localization target without changing the arrangement position of the sensors 3. In other words, the sensor array corresponding to the frequency can be virtually regenerated, and the sound source localization can be performed. That is, versatility in sound source localization can be improved.

The present disclosure is not limited to the above-described embodiments, and various modifications can be made without departing from the scope of the invention.

The sound source localization system, and the sound source localization method and the sound source localization program thereof, according to each of the embodiments described above are discerned as follows, for example.

A sound source localization system (1) according to the present disclosure includes: a plurality of sensors (3) disposed surrounding a space (S) and configured to detect a sound pressure and a particle velocity; an estimation unit (5) configured to estimate a sound pressure at a virtual position (VP) corresponding to a frequency of a localization target in the space (S) on the basis of the sound pressure and the particle velocity detected by the plurality of sensors (3); and a localization unit (6) configured to perform sound source localization corresponding to the frequency on the basis of the sound pressure at the virtual position (VP).

According to the sound source localization system (1) of the present disclosure, the sound pressure inside the surrounded space (S) can be estimated on the basis of the sound pressure and the particle velocity detected by the plurality of sensors (3) surrounding the space (S). That is, the sound pressure at a virtual position (a position where the sensors (3) are not disposed) that is a position set in the space (S) according to a frequency of a localization target can be estimated. On the basis of the sound pressure at the virtual position, the sound source localization with respect to the frequency can be performed. That is, the sound source localization can be performed with a freely-selected frequency as a localization target without changing the arrangement position of the sensors (3). In other words, the sensor array corresponding to the frequency can be virtually regenerated, and the sound source localization can be performed. That is, versatility in sound source localization can be improved.

In the sound source localization system (1) according to the present disclosure, the estimation unit may estimate a sound pressure inside the space on the basis of a sound pressure and a particle velocity at a boundary of the space detected by the plurality of sensors.

According to the sound source localization system (1) of the present disclosure, the sound pressure inside the space can be estimated on the basis of the sound pressure and the particle velocity at the boundary (outer peripheral surface) of the space detected by the sensor.

In the sound source localization system (1) according to the present disclosure, the estimation unit (5) may estimate the sound pressure inside the space (S) by the Kirchhoff-Helmholtz integral theorem on the basis of the sound pressure and the particle velocity detected by the plurality of sensors (3) disposed around the space (S).

According to the sound source localization system (1) of the present disclosure, the sound pressure inside the space (S) can be estimated on the basis of the sound pressure and the particle velocity detected by the sensors (3) disposed around the space (S) by using the Kirchhoff-Helmholtz integral theorem.

In the sound source localization system (1) according to the present disclosure, a plurality of the virtual positions (VP) may be set in the space (S) on the basis of a frequency of a localization target and a localization direction.

According to the sound source localization system (1) of the present disclosure, the plurality of virtual positions (VP) are set in the space (S) on the basis of the frequency of the localization target and the localization direction, and this allows sound source localization corresponding to the frequency of the localization target and the localization direction to be performed without changing the arrangement position of the sensors (3).

In the sound source localization system (1) according to the present disclosure, the localization unit (6) may perform the sound source localization by performing beamforming on the basis of the sound pressures at a plurality of the virtual positions (VP).

According to the sound source localization system (1) of the present disclosure, sound source localization can be performed by performing beamforming on the basis of the sound pressures at the plurality of virtual positions (VP).

In the sound source localization system (1) according to the present disclosure, the plurality of sensors (3) may be disposed on a spherical surface, and the estimation unit (5) may estimate a sound pressure distribution on the spherical surface on the basis of the sound pressure and the particle velocity detected by the plurality of sensors (3), and estimate the sound pressure at the virtual position (VP) in the space (S) on the basis of the sound pressure distribution on the spherical surface.

According to the sound source localization system (1) of the present disclosure, in a case where the sensors (3) are disposed on a spherical surface, the sound pressure distribution on the spherical surface can be estimated on the basis of the sound pressure and the particle velocity detected by the sensors (3). The sound pressure distribution on the spherical surface is estimated on the basis of the sound pressure and the particle velocity detected by the sensors (3), and this allows the estimation accuracy of the sound pressure to be improved. That is, the interval between the virtual positions (VP) can be set narrow, and a higher frequency can be available.

In the sound source localization system (1) according to the present disclosure, the estimation unit may estimate the sound pressure distribution on the spherical surface using spherical harmonics as a basis function.

According to the sound source localization system (1) of the present disclosure, a sound pressure distribution on a spherical surface can be estimated by using spherical harmonics as a basis function.

In the sound source localization system (1) according to the present disclosure, the plurality of sensors (3) may be disposed on a rectangular parallelepiped, and the estimation unit (5) may estimate a sound pressure distribution on the rectangular parallelepiped on the basis of the sound pressure and the particle velocity detected by the plurality of sensors (3), and estimate the sound pressure at the virtual position (VP) in the space (S) on the basis of the sound pressure distribution on the rectangular parallelepiped.

According to the sound source localization system (1) of the present disclosure, in a case where the sensor (3) is disposed on a rectangular parallelepiped, the sound pressure distribution on the rectangular parallelepiped can be estimated on the basis of the sound pressure and the particle velocity detected by the sensors (3). The sound pressure distribution on the rectangular parallelepiped is estimated on the basis of the sound pressure and the particle velocity detected by the sensors (3), and this allows the estimation accuracy of the sound pressure to be improved. That is, the interval between the virtual positions (VP) can be set narrow, and a higher frequency can be available.

In the sound source localization system (1) according to the present disclosure, the estimation unit may estimate the sound pressure distribution on the rectangular parallelepiped using a sine wave as a basis function.

According to the sound source localization system (1) of the present disclosure, a sound pressure distribution on a rectangular parallelepiped can be estimated by using a sine wave as a basis function.

A sound source localization method according to the present disclosure includes the steps of: estimating a sound pressure at a virtual position (VP) corresponding to a frequency of a localization target in a space (S) on the basis of a sound pressure and a particle velocity detected by a plurality of sensors (3) disposed surrounding the space (S) and configured to detect the sound pressure and the particle velocity; and performing sound source localization corresponding to the frequency on the basis of the sound pressure at the virtual position (VP).

A sound source localization program according to the present disclosure causes a computer to execute: a process of estimating a sound pressure at a virtual position (VP) corresponding to a frequency of a localization target in a space (S) on the basis of a sound pressure and a particle velocity detected by a plurality of sensors (3) disposed surrounding the space (S) and configured to detect the sound pressure and the particle velocity; and a process of performing sound source localization corresponding to the frequency on the basis of the sound pressure at the virtual position (VP).

Reference Signs List

1 Sound source localization system
2 Sensor array
3 Sensor
4 Information processing unit
5 Estimation unit
6 Localization unit
8 Fan
11 CPU
12 ROM
13 RAM
14 Hard disk drive

15 Communication unit
18 Bus
S Space
VP Virtual position

**Claims**

1. A sound source localization system, comprising:

   a plurality of sensors disposed surrounding a space and configured to detect a sound pressure and a particle velocity;
   an estimation unit configured to estimate a sound pressure at a virtual position corresponding to a frequency of a localization target in the space on the basis of the sound pressure and the particle velocity detected by the plurality of sensors; and
   a localization unit configured to perform sound source localization corresponding to the frequency on the basis of the sound pressure at the virtual position.

2. The sound source localization system according to claim 1, wherein
   the estimation unit estimates a sound pressure inside the space on the basis of the sound pressure and the particle velocity at a boundary of the space detected by the plurality of sensors.

3. The sound source localization system according to claim 2, wherein
   the estimation unit estimates the sound pressure inside the space by a Kirchhoff-Helmholtz integral theorem.

4. The sound source localization system according to any one of claims 1 to 3, wherein
   a plurality of the virtual positions are set in the space on the basis of a frequency of a localization target and a localization direction.

5. The sound source localization system according to any one of claims 1 to 4, wherein
   the localization unit performs beamforming on the basis of sound pressures at a plurality of the virtual positions and performs sound source localization.

6. The sound source localization system according to any one of claims 1 to 5, wherein

   the plurality of sensors are disposed on a spherical surface, and
   the estimation unit estimates a sound pressure distribution on the spherical surface on the basis of the sound pressure and the particle velocity detected by the plurality of sensors and estimates the sound pressure at the virtual position in the space on the basis of the sound pressure distribution on the spherical surface.

7. The sound source localization system according to claim 6, wherein
   the estimation unit estimates the sound pressure distribution on the spherical surface using spherical harmonics as a basis function.

8. The sound source localization system according to any one of claims 1 to 5, wherein

   the plurality of sensors are disposed on a rectangular parallelepiped, and
   the estimation unit estimates a sound pressure distribution on the rectangular parallelepiped on the basis of the sound pressure and the particle velocity detected by the plurality of sensors and estimates the sound pressure at the virtual position in the space on the basis of the sound pressure distribution on the rectangular parallelepiped.

9. The sound source localization system according to claim 8, wherein
   the estimation unit estimates the sound pressure distribution on the rectangular parallelepiped using a sine wave as a basis function.

10. A sound source localization method, comprising the steps of:

    estimating a sound pressure at a virtual position corresponding to a frequency of a localization target in a space on the basis of a sound pressure and a particle velocity detected by a plurality of sensors disposed surrounding the space and configured to detect the sound pressure and the particle velocity; and

performing sound source localization corresponding to the frequency on the basis of the sound pressure at the virtual position.

**11.** A sound source localization program, configured to cause a computer to execute:

a process of estimating a sound pressure at a virtual position corresponding to a frequency of a localization target in a space on the basis of a sound pressure and a particle velocity detected by a plurality of sensors disposed surrounding the space and configured to detect the sound pressure and the particle velocity; and

a process of performing sound source localization corresponding to the frequency on the basis of the sound pressure at the virtual position.

FIG. 1

**FIG. 2**

FIG. 3

FIG. 4

FIG. 5

START

ACQUIRE MEASUREMENT
RESULT FROM EACH SENSOR — S101

REGENERATE SOUND
PRESSURE IN SPACE — S102

VISUALIZE SOUND SOURCE — S103

END

# FIG. 6

START

ACQUIRE MEASUREMENT
RESULT FROM EACH SENSOR — S101

ESTIMATE SOUND PRESSURE
DISTRIBUTION ON SPHERICAL
SURFACE — S202

REGENERATE SOUND
PRESSURE IN SPACE — S102

VISUALIZE SOUND SOURCE — S103

END

FIG. 7

START

ACQUIRE MEASUREMENT RESULT FROM EACH SENSOR — S101

ESTIMATE SOUND PRESSURE DISTRIBUTION ON RECTANGULAR PARALLELEPIPED — S302

REGENERATE SOUND PRESSURE IN SPACE — S102

VISUALIZE SOUND SOURCE — S103

END

# FIG. 8

Europäisches
Patentamt

European
Patent Office

Office européen
des brevets

# EUROPEAN SEARCH REPORT

Application Number

EP 21 15 2069

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | CN 110 554 358 A (UNIV HARBIN ENG) 10 December 2019 (2019-12-10) * figures 2,3 * * paragraph [0005] - paragraph [0009] * * paragraph [0015] - paragraph [0017] * * paragraph [0088] * | 1,2,5-11 | INV. G01S3/808 H04R1/20 |
| A | EP 0 998 167 A2 (FUJITSU LTD [JP]) 3 May 2000 (2000-05-03) * figure 5 * * paragraph [0079] - paragraph [0084] * | 1-11 | |
| A | SALVADOR CÉSAR D ET AL: "Enhancement of Spatial Sound Recordings by Adding Virtual Microphones to Spherical Microphone Arrays", JOURNAL OF INFORMATION HIDING AND MULTIMEDIA SIGNAL PROCESSING, vol. 8, no. 6, 8 November 2017 (2017-11-08), pages 1392-1404, XP055822270, * page 1397, section 4 * | 1-11 | |
| A | GIOVANNI DEL GALDO ET AL: "Generating virtual microphone signals using geometrical information gathered by distributed arrays", HANDS-FREE SPEECH COMMUNICATION AND MICROPHONE ARRAYS (HSCMA), 2011 JOINT WORKSHOP ON, IEEE, 30 May 2011 (2011-05-30), pages 185-190, XP031957294, DOI: 10.1109/HSCMA.2011.5942394 ISBN: 978-1-4577-0997-5 * section "Introduction", third paragraph * | 1-11 | TECHNICAL FIELDS SEARCHED (IPC) G01S H04S H04R |

The present search report has been drawn up for all claims

| Place of search | Date of completion of the search | Examiner |
|---|---|---|
| Munich | 9 July 2021 | Hekmat, Taymoor |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document

EPO FORM 1503 03.82 (P04C01)

## ANNEX TO THE EUROPEAN SEARCH REPORT
## ON EUROPEAN PATENT APPLICATION NO.

EP 21 15 2069

This annex lists the patent family members relating to the patent documents cited in the above-mentioned European search report.
The members are as contained in the European Patent Office EDP file on
The European Patent Office is in no way liable for these particulars which are merely given for the purpose of information.

09-07-2021

| Patent document cited in search report | | Publication date | Patent family member(s) | | Publication date |
|---|---|---|---|---|---|
| CN 110554358 | A | 10-12-2019 | NONE | | |
| EP 0998167 | A2 | 03-05-2000 | EP | 0998167 A2 | 03-05-2000 |
| | | | JP | 3863306 B2 | 27-12-2006 |
| | | | JP | 2000134688 A | 12-05-2000 |
| | | | US | 6760449 B1 | 06-07-2004 |

For more details about this annex : see Official Journal of the European Patent Office, No. 12/82

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- WO 2014156292 A